# NEUE EUROPÄISCHE PATENTSCHRIFT

(11) **EP 1 282 353 B2**
(45) Veröffentlichungstag und Bekanntmachung des Hinweises auf die Entscheidung über den Einspruch: **29.04.2009**
(45) Hinweis auf die Patenterteilung: 31.08.2005
(21) Anmeldenummer: 01945090.7
(22) Anmeldetag: 05.05.2001
(51) Int. Cl.: A01N 25/32, A01N 25/28, A01N 43/76, A01N 43/40, A01N 39/02, A01N 55/10, A01P 13/00

(54) **KOMBINATIONEN VON PFLANZENSCHUTZMITTELN MIT ORGANISCHEN ODER ANORGANISCHEN TRÄGERMATERIALIEN**
COMBINATIONS OF PLANT PROTECTION AGENTS WITH ORGANIC OR INORGANIC MATRIX MATERIALS
COMBINAISONS D'AGENTS PHYTOSANITAIRES AVEC DES MATERIAUX SUPPORTS ORGANIQUES OU INORGANIQUES

(30) Priorität: 11.05.2000 DE 10022989
(43) Veröffentlichungstag der Anmeldung: 12.02.2003
(60) Teilanmeldung: 04028153.7
(73) Patentinhaber: Bayer CropScience AG, 40789 Monheim (DE)
(72) Erfinder: KRAUSE, Hans-Peter, 65719 Hofheim (DE); SCHNABEL, Gerhard, 63820 Elsenfeld (DE); FRISCH, Gerhard, 61273 Wehrheim (DE); WÜRTZ, Jochen, 55543 Bad Kreuznach (DE); BICKERS, Udo, 49835 Wietmarschen (DE); HACKER, Erwin, 65239 Hochheim (DE); AULER, Thomas, 65812 Bad Soden (DE); MELENDEZ, Alvaro, Valle des Jaral 6, C.P. 52937, Estado de Mexico (MX); HAASE, Detlev, 65929 Frankfurt (DE)
(74) Vertreter: Ackermann, Joachim
(86) Internationale Anmeldenummer: PCT/EP2001/005099
(87) Internationale Veröffentlichungsnummer: WO 2001/084928

(56) Entgegenhaltungen:
- EP-A- 0 084 253
- EP-A- 0 498 332
- EP-A- 0 619 073
- EP-A2- 1 138 201
- WO-A-00/10392
- WO-A-90/08468
- WO-A-96/26719
- DE-A- 2 757 017
- US-A- 5 310 721
- US-A- 5 529 974
- D. A. KNOWLES, FORM-AK FORMULATION CONSULTANCY SERVICES, TONBRIDGE, KENT UK: 'Chemistry and Technology of Agrochemical Formulations', 1998, KLUWER ACADEMIC PUBLISHERS, DORDRECHT/BOSTON/LONDON Artikel '5.3 Controlled-release formuations', Seiten 132 - 147

## Beschreibung

Die vorliegende Erfindung betrifft Kombinationen von Pflanzenschutzwirkstoffen mit organischen oder anorganischen Trägermaterialien, die eine kontrollierte Abgabe ("controlled release") eines Wirkstoffs ermöglichen. Die Kombinationen sind in der Lage, Antagonismen zu verhindern und ergeben besonders gute Resultate bei Herbiziden, insbesondere bei Mischungen von Herbiziden mit Wachstumsregulatoren und Safenem.

Es ist bekannt, daß bei der Applikation von verschiedenen agrochemischen Produkten, beispielsweise Herbiziden, Fungiziden, Insektiziden, Pflanzenwachstumsregulatoren, Safenem oder Düngemitteln diverse Applikationsprobleme, etwa Minderwirkung aufgrund antagonistischer Wechselwirkungen zwischen zwei oder mehr Wirkstoffen, auftreten kann. Bekannt ist ferner, daß diese Phänomene häufig bei der sogenannten Blattapplikation zu beobachten sind, und dabei wiederum insbesondere bei Herbiziden oder auch der Mischung von Herbiziden mit Safenem und/oder Wachstumsregulatoren.

Um dies zu vermeiden, wurden im Falle von antagonistischer Minderwirkung beispielsweise eine sogenannte Splittapplikation bzw. eine Überdosierung des antagonisierten Wirkstoffs empfohlen. Diese Vorgehensweisen sind jedoch aus verschiedenen Gründen wenig attraktiv und unwirtschaftlich. Bei der Splittapplikation muß die Wirkstoffformulierung mindestens zweimal aufgebracht werden, das ist zeit-und arbeitsintensiv. Beim Überdosieren eines Wirkstoffs entstehen Mehrkosten.

Die US 5,428,000 offenbart Wirkstoffzusammensetzungen, die ein Herbizid für breitblättriges Unkraut und ein Herbizid für schmalblättriges Unkraut aufweisen. Dabei ist das Herbizid für schmalblättriges Unkraut ladungsneutral, das Herbizid für breitblättriges Unkraut ist dagegen anionischer Natur und liegt in Kombination mit einem hydrophilen Polymer vor, das ein Copolymer entstanden aus einer ammoniumhaltigen Verbindung und einer nicht-ammoniumhaltigen Verbindung ist.

Die ammoniumhaltige Verbindung ist dabei im allgemeinen abgeleitet von aromatischen und nicht aromatischen Stickstoffheterocyclen, Ammoniumderivaten der Acrylsäure und Benzylammoniumverbindungen. Die hydrophilen Polymere, die verwendet werden, sind ausschließlich Copolymere des vorstehend dargestellten Typs. Als Herbizide für schmalblättriges Unkraut werden Sethoxydim, Alloxidim, Fluazifop, Quizalofop oder Fenoxaprop verwendet, für breitblättriges Unkraut ist die Verwendung von Bentazon, Imazaquin, Acifluorfen, Fomesafen, Chlorimuron, Imazethapyr, Thifensulfuron und 2,4-D beschrieben.

Aus DE 198 33 066 sind wässrige Dispersionen von Polymerisaten mit kationischer Funktionalität und aus den Dispersionen erhältliche redispergierbare Pulver sowie deren Verwendung u.a. zur verzögerten Freisetzung für Wirkstoffe aller Art beschrieben.

Aus EP 0 619 073 A2 sind Kombinationen von Glyphosate mit verkapseltem Alachlor bekannt, wobei der Antagonismus durch Zugabe von Tetrakalium-pyrophosphate reduziert wird.

Aus EP 0 498 332 A1 sind wasseremulgierbare Granulate von Pflanzenschutzmitteln bekannt, welche einen pestiziden Wirkstoff und ein zumindest teilweise wasserlösliches hüll- und strukturbildendes Material enthalten.

Aus WO 90/08468 sind Pflanzenschutzmittel-Formulierungen auf Wasserbasis bekannt, welche einen verkapselten und einen unverkapselten biologisch aktiven Wirkstoff enthalten.

Aus EP 0 084 253 A1 sind Kombinationen von Pyrrolidon-Herbiziden mit bestimmten Safenern bekannt. Das Pyrrolidon-Herbizid kann verkapselt sein, was jedoch zu keiner Reduktion des Antagonismus führt.

Aus WO 96/26719 sind Kompositionen von biologisch aktiven Wirkstoffen und vernetzten Produkten wasserlöslicher Polysaccaride bekannt, zur verlängerten Wirkstofffreisetzung.

Es ist die Aufgabe der vorliegenden Erfindung, Formulierungen von Pflanzenschutzwirkstoffen bereitzustellen, mit denen sich Splittapplikationen und Überdosierung vermeiden lassen und antagonistische Wechselwirkungen unterdrücken lassen.

Diese Aufgabe wird gelöst durch die Verwendung einer Controlled-Release-Kombination aus einem agrochemischen Wirkstoff, insbesondere einem Herbizid, und einem den Wirkstoff umgebenden Träger zur Unterdrückung von antagonistischen Wechselwirkungen in einem Gemisch aus dem mit dem Trägermaterial umgebenen Wirkstoff und mindestens einem weiteren agrochemischen Wirkstoff, wobei mindestens einer der agrochemischen Wirkstoffe ein Herbizid aus der Gruppe bestehend aus (Hetero)-aryloxy-aryoxyalkylcarbonsäuren, vorzugsweise Fenoxaprop-p-Ethyl, Dichlofop, Clodinafop-Propargyl, Fluazifop, Cyclohexandionoxime, vorzugsweise Sethoxidim, Clethodim oder Trialkoxidim, und mindestens einer ein Safener ist.

Es wurde gefunden, daß sich Probleme wie durch Antagonismus hervorgerufene Minderwirkung durch Kombination bestimmter organischer oder anorganischer Trägermaterialien mit einem oder mehreren agrochemischen Wirkstoffen vermeiden lassen.

Ein weiterer Gegenstand der vorliegenden Erfindung ist die Applikation der erfindungsgemäßen Kombination zur Kontrolle von unerwünschten Schadorganismen, insbesondere von unerwünschten Gräsern und Unkräutern, sowie die Formulierung gemäß Anspruch 8.

In der erfindungsgemäßen Träger-Wirkstoff-Kombination wird der agrochemische Wirkstoff in geeignete Trägermaterialien eingearbeitet, die organischer oder anorganischer Herkunft sind. Diese Trägermaterialien umgeben die Wirkstoffe derart, daß sie nicht unmittelbar in die Umgebung austreten können. Die Wirkstoffe sind physikalisch von der Umgebung und dem oder den weiteren Wirkstoffen getrennt. Erst durch bestimmte Mechanismen, etwa Abbau des Trägermaterials, Aufplatzen des den Wirkstoff umgebenden Trägers oder Herausdiffundieren erfolgt die Freisetzung des Wirkstoffs.

Der in den Träger ganz oder teilweise eingearbeitete agrochemische Wirkstoff kann ein Wirkstoff sein, der in einem vorgesehenen Wirkstoffgemisch eine antagonistische Wirkung aufweisen kann. Auch zwei oder mehrere Wirkstoffe in einem Wirkstoffgemisch können dabei in einem Träger eingearbeitet sein.

Die Einarbeitung von Wirkstoffen in Trägermaterialien zum Bereitstellen von Formulierungen, die eine kontrollierte Freisetzung ermöglichen, ist im Prinzip bekannt und kann der Fachliteratur entnommen werden. Beispiele finden sich in C. L. Foy, D. W. Pritchard, "Pestizide Formulation and Technology", CRC Press, 1996, Seite 273 ff. und darin zitierte Literatur, und D. A. Knowles, "Chemistry and Technology of Agrochemical Formulations", Kluwer Academic Press, 1998, Seite 132 ff. und darin zitierte Literatur.

Die Trägermaterialien, die die Wirkstoffe umgeben oder umhüllen, sind dabei so gewählt, daß sie in einem geeigneten Temperaturbereich, vorzugsweise dem Bereich von etwa 0-50°C, fest sind. Unter festen Materialien werden dabei Materialien verstanden, die hart, wachsartig elastisch, amorph oder kristallin sind, aber nicht oder noch nicht im flüssigen Aggregatzustand vorliegen. Die Trägermaterialien können anorganischer oder organischer Natur und von synthetischer oder natürlicher Herkunft sein.

Eine Möglichkeit des Einbringens der agrochemischen Wirkstoffe in geeignete Trägermaterialien ist beispielsweise die Mikroverkapselung. Diese Mikrokapseln können aus polymeren Materialien synthetische und/oder natürlicher Herkunft bestehen. Beispiele geeigneter Materialien umfassen Polyharnstoffe, Polyurethane, Polyamide, Melaminharze, Gelatine, Wachs und Stärke.

Mikrokapseln aus einigen dieser Materialien lassen sich beispielsweise nach der Methode der Grenzflächen-Polykondensation ("interfacial polycondensation") herstellen. Über die Menge an Monomeren, Wirkstoffmenge, Wasser- und Lösungsmittelmenge sowie Prozeßparameter lassen sich Partikelgröße und Wandstärke gut kontrollieren und somit auch die Freisetzungsgeschwindigkeiten.

Im Fall von Mikrokapseln aus Polyurethanen oder Polyharnstoffen besteht die gebräuchlichste Weise zum Aufbau der genannten Kapselwand um den zu umhüllenden Wirkstoff in einer Grenzphasenpolymerisation an Öl-in-Wasser Emulsionen, wobei die organische Phase neben dem Wirkstoff ein öllösliches Präpolymer mit freien Isocyanatgruppen enthält.

Als Präpolymer eignen sich die üblichen, einem Fachmann bekannten Isocyanate, z.B. auf Basis von 2,4-Toluylendiisocyanat, 2,6-Toluylendiisocyanat, 4,4'-Methylendi(phenylisocyanat) und Hexamethylendiisocyanat.

Die Polymerisation, also der Aufbau der Hülle der Mikrokapseln, wird generell nach den üblichen, einem Fachmann bekannten Methoden durchgeführt.

Das kapselbildende Material, aus dem die Hüllen der Mikrokapseln aufgebaut sind, wird vorzugsweise ausgehend von öllöslichen, Isocyanat-Gruppen enthaltenden Präpolymeren erhalten, bei welchen es sich um eine Gruppe technischer Mischprodukte handelt, die jeweils aus Polyisocyanaten auf Basis von Kondensaten aus Anilin und Formaldehyd bestehen. Diese technischen Mischprodukte unterscheiden sich voneinander im Kondensationsgrad und gegebenenfalls in chemischen Modifikationen. Wichtige Kenngrößen sind für den Anwender Viskosität und Gehalt an freien Isocyanatgruppen. Typische Verkaufsprodukte sind hier Desmodur®-Marken (Bayer AG) und Voranate®-Marken (Dow Chemicals). Es ist für die Erfindung bevorzugt, daß die Einsatzmenge an Präpolymer mit Isocyanatgruppen ≤ 5 Gew.-% bezogen auf die Gesamtformulierung ist; bevorzugt werden 0,5 - 5 Gew.-%, insbesondere 1-2 Gew.-%.

Das kapselbildende Material wird gebildet durch Aushärten des Isocyanat-Präpolymers entweder in Gegenwart von Wasser bei 0-95°C, vorzugsweise 20-65°C oder, vorzugsweise mit der erforderlichen Menge eines Di- oder Polyamins.

Für den Fall, daß die Mikrokapseln unter Einbezug von Di- oder Polyaminen gebildet werden, kommen als solche beispielsweise Alkylendiamine, Dialkylentriamine und Trialkylentetramine in Frage, deren Kohlenstoffkette-Einheiten zwischen 2 und 8 Kohlenstoffatome enthalten. Bevorzugt wird Hexamethylendiamin. Dabei können entweder Mengen eingesetzt werden, die im stöchiometrischen Verhältnis zur verwendeten Menge an Isocyanat-Präpolymer stehen, oder vorzugsweise im bis zu dreifachen, insbesondere im bis zu zweifachen Überschuß.

In der Literatur finden sich weitere Methoden zur Herstellung von Mikrokapseln aus Polyurethanen oder Polyharnstoff, die ebenfalls für die Herstellung der erfindungsgemäßen Mikrokapseln geeignet sind. Diese werden nachfolgend aufgeführt.

In der US-A-3 577 515 wird beschrieben, wie nach Zugabe von wasserlöslichen Polyaminen die Tropfenoberfläche in solchen Emulsionen infolge der Addition an die Isocyanatgruppen enthaltenden Präpolymere aushärtet. Dabei entsteht eine Polyharnstoff-Außenhülle.

Aus der US-A-4 140 516 ist bekannt, daß man auch ohne externe wasserlösliche Amine Mikrokapseln mit einer Außenhaut vom Polyharnstofftyp erhalten kann, indem man in der Emulsion partielle Hydrolyse des Isocyanatfunktionen tragenden Präpolymers zuläßt. Dabei rekonstituiert sich ein Teil der Amino- aus den Isocyanatgruppen und es kommt durch interne Polyaddition mit nachfolgender Aushärtung ebenfalls die gewünschte Kapselhülle zustande. Es wird die Verwendung von Toluylendiisocyanat, Hexamethylendiisocyanat,

Methylendiphenyldiisocyanat und dessen höherer Homologe beschrieben. Falls mit einem externen Polyamin ausgehärtet werden soll, stamm dieses meist aus der Gruppe Ethylendiamin, Propylendiamin, Hexamethylendiamin, Diethylentriamin und Tetraethylenpentamin.

Die DE-A-2 757 017 offenbart innenstrukturierte Mikrokapseln, deren Wandmaterial die Natur eines gemischten Polymers hat, welches durch Harnstoff- und Urethan-Motive vernetzt ist. Im Inneren der Kapsel befindet sich der Wirkstoff gelöst in einem organischen Solvens. Typischerweise werden hier zum Aufbau der Kapselwand 10 % bezogen auf die Gesamtformulierung an Präpolymer benötigt.

Das gleiche Präpolymer wird auch nach der WO-A-96/09760 zur Verkapselung von z.B. Endosulfan eingesetzt.

Die WO-A-95/23506 offenbart mit Endosulfan beladene Polyharnstoff-Mikrokapseln, in denen der Wirkstoff als erkaltete Schmelze vorliegt. Als Präpolymer wird ein Gemisch aus Methylendiphenyldiisocyanat und dessen höheren Homologen beschrieben, die Einsatzmenge an Präpolymer bezogen auf die Gesamtformulierung beträgt über 6 %. Es wird mit einem Gemisch von Polyaminen ausgehärtet.

Der Inhalt der oben aufgeführten Patente und Patentanmeldungen bezüglich der Materialien der Mikrokapselwand und der Herstellungsverfahren ist ein wichtiger und integraler Bestandteil der vorliegenden Erfindung und durch Referenz in die vorliegende Anmeldung einbezogen.

Eine weitere Möglichkeit der Verkapselung liegt in der Kapselbildung aus z.B. Melamin/Formaldehyd oder Harnstoff/Formaldehyd.

Hierzu wird Melamin bzw. die oben genannten Isocyanat-Präpolymeren in Wasser vorgelegt und mit dem wasserunlöslichen Wirkstoff versetzt. Dieser wurde zuvor dispergiert oder in einem wasserunlöslichen Solvenz gelöst und emulgiert. Durch Einstellen eines sauren pH-Werts von ca. 3-4, vorzugsweise ca. 3-5, und mehrstündigem Rühren bei erhöhter Temperatur zwischen 30 und 60°C, vorzugsweise 50°C, bildet sich die Kapselwand durch Polykondensation. Beispiele hierfür sind in der US 4,157,983 und der US 3,594,328 beschrieben, deren Inhalt bezüglich der Herstellung der Kapseln durch Referenz in die vorliegende Anmeldung einbezogen ist.

Eine weitere geeignete Methode zur Mikroverkapselung der agrochemischen Wirkstoffe stellt auch die Coacervation dar. Hierzu wird der wasserunlösliche agrochemische Wirkstoff in Wasser dispergiert und mit einem anionischen, wasserlöslichen Polymer sowie einem kationischen Material versetzt. Die durch sogenannte Coacervation entstehenden Mikrokapseln mit dem ursprünglich wasserlöslichen Polymer als Wandmaterial sind wasserunlöslich. Im letzten Schritt wird die Kapsel dann durch Kondensationsreaktion mit Aldeyhden ausgehärtet. Beispielsweise eignet sich hierfür die Kombination Gelatine/Gummi arabicum (1:1) und Formaldehyd. Das Verfahren der Mikroverkapselung durch Coacervation ist einem Fachmann bekannt. Ausführlich wird die Methode beispielsweise von J. A. Bahan "Microencapsulation using Coacervation/Phase Separation Techniques, Controlled Released Technology: Methods Theory and Application", Vol. 2, Kydoniens, A. F, Ed. CRC Press, Inc., Boca Raton, FL. 1980, Chapter 4 beschrieben.

Schließlich kann zur Mikroverkapselung beispielsweise der Wirkstoff und das Polymer, das die Kapselwand bildet, in Wasser mit einem geeigneten Surfactant emulgiert werden. Dabei dürfen sich Polymer und Wirkstoff nicht ineinander lösen. Anschließend wird unter Rühren das Lösemittel verdampft. Beim Entfernen des Wassers bildet das Polymer eine Schicht um die Oberfläche des emulgierten Tropfens.

Ein anderes geeignetes Material zur Herstellung von Mikrokapseln ist Wachs. Dazu werden entweder selbstemulgierende Wachse in Wasser unter Scherung in der Wärme aufgelöst, oder durch Zugabe von Surfactants und Wärme unter Scherung in eine Emulsion überführt. Lipophile agrochemische Wirkstoffe lösen sich im geschmolzenen und emulgierten Wachs. Die Tropfen erstarren während des Abkühlens und bilden so die Wachsdispersion.

Alternativ können Wachsdispersionen hergestellt werden, indem Wirkstoff-Wachs-Extrusionsgranulate in Wasser oder Öl dispergiert und fein vermahlen werden, z.B. zu Partikelgrößen von < 20 µm.

Als Wachse eignen sich z.B. PEG 6000 im Gemisch mit nicht hydrophilen Wachsen, Synchrowachs HGLC1, Mostermont® CAV2, Hoechst-Wachs OP3 oder Kombinationen dieser Wachse.

Eine wäßrige Dispersion der Partikel (Mikrokapseln oder Wachspartikel) kann analog der Rezepturen für eine CS-Formulierung (Kapselsuspension) erhalten werden.

Die nach den oben beschriebenen Methoden erhaltenen Mikrokapseln können in unterschiedliche, unten im Text erwähnte Formulierungen eingebaut werden. Dabei können auch weitere Wirkstoffe in die Formulierung eingearbeitet werden, beispielsweise wasserlösliche Wirkstoffe in der wäßrigen Phase der Kapseldispersion, oder beispielsweise feste Wirkstoffe in WG-Formulierungen.

Nach erfolgter Mikroverkapselung können die Kapseln vom Lösungsmittel befreit und mit den üblichen Methoden, beispielsweise Sprühtrocknen, getrocknet werden.

Die Kapseln lassen sich derart lagern und verschicken und werden vor dem Aufbringen auf die entsprechenden Kultur mit eventuellen weiteren Wirkstoffen, Adjuvantien und den üblichen Zusatzstoffen formuliert.

Die nach dem Aushärten der Kapseln erhaltene Dispersion kann jedoch auch zur Herstellung geeigneter agrochemischer Formulierungen enthaltend die oben erwähnten weiteren Bestandteile verwendet werden, ohne daß die Kapseln aus den Dispersionen isoliert werden.

In diesen Mikrokapseldispersionen können organische Lösemittel oder deren Gemische aus der Gruppe der N-Alkylfettsäureamide, N-Alkyllactame, Fettsäureester, Cyclohexanone, Isophorone, Phthalsäureester und aromatischen Kohlenwasserstoffe eingesetzt werden, wobei niederalkylsubstituierte Naphthalinderivate besonders geeignet sind.

Erfindungsgemäß geeignete, im Handel erhältliche Lösemittel sind beispielsweise Solvesso® 200 Solvesso® 150 und Solvesso® 100 (1), Butyldiglykolacetat, Shellsol® RA (2), Acetrel® 400 (3), Agsolex® 8 (4), Agsolex® 12 (5), Norpar® 13 (6), Norpar® 15 (7), Isopar® V (8), Exsol® D 100 (9), Shellsol® K (10) und Shellsol® R (11), welche sich wie folgt zusammensetzen:
(1) Aromatengemische; Hersteller. Exxon.
(2) Gemische alkylierter Benzole, Siedebereich 183-312°C, Hersteller: Shell.
(3) Hochsiedendes Aromatengemisch, Siedebereich: 332-355°C, Hersteller: Exxon.
(4) N-Octylpyrrolidon, Siedepunkt (0,3 mm Hg) 100°C, Hersteller: GAF.
(5) N-Dodecylpyrrolidon, Siedepunkt (0,3 mm Hg) 145°C, Hersteller: GAF.
(6) Aliphatische Kohlenwasserstoffe, Siedebereich: 228-243°C, Hersteller: Exxon.
(7) Aliphatische Kohlenwasserstoffe, Siedebereich: 252-272°C, Hersteller: Exxon.
(8) Aliphatische Kohlenwasserstoffe, Siedebereich: 278-305°C, Hersteller: Exxon.
(9) Aliphatische Kohlenwasserstoffe, Siedebereich: 233-263°C, Hersteller: Exxon.
(10) Aliphatische Kohlenwasserstoffe, Siedebereich: 192-254°C, Hersteller: Shell.
(11) Aliphatische Kohlenwasserstoffe, Siedebereich: 203-267°C, Hersteller: Shell.

Auch Mischungen dieser Lösemittel untereinander sind geeignet. Insbesondere sind Butyldiglykolacetat, Acetrel® 400, Agsolex® 8 und Agsolex® 12 gut verwendbar. Solvesso® 200 ist besonders bevorzugt.

In der wäßrigen Phase der erfindungsgemäßen Dispersionen sind oberflächenaktive Formulierungshilfstoffe aus der Gruppe der Emulgatoren und Dispergatoren enthalten. Sie stammen aus einer Gruppe, welche z.B. die Stoffamilien der Polyvinylalkohole, der Polyalkylenoxide, der Kondensationsprodukte von Formaldehyd mit Naphthalinsulfonsäuren und/oder Phenolen, der Polyacrylate, der Copolymerer aus Maleinsäureanhydrid mit Alkylenalkylether, der Ligninsulfonate, und der Polyvinylpyrrolidone umfaßt. Diese Stoffe werden zu 0,2 bis 10 Gew.-%, bevorzugt zu 0,5 bis 4 Gew.-%, jeweils bezogen auf die gesamte Dispersion eingesetzt.

Bei den Polyalkylenoxiden werden Blockcopolymere bevorzugt, deren Molekülzentrum von einem Polypropylenoxidblock, die Molekülperipherie dagegen von Polyethylenoxidblöcken gebildet wird. Besonders bevorzugt werden dabei Stoffe, bei welchen der Polypropylenblock eine Molmasse von 2000 - 3000 aufweist, und die Polyethylenoxidblöcke einen Anteil von 60 bis 80 % an der gesamten Molmasse ausmachen. Ein solcher Stoff wird z.B. von der Firma BASF Wyandotte unter der Bezeichnung Pluronic® F87 vertrieben.

Weitere geeignete Dispergatoren sind Calcium-Ligninsulfonat, hochveredeltes Natrium-Ligninsulfonat (z.B. Vanisperse® CB der Fa. Borregaard), Dispergiermittel S und Dispergiermittel SS der Fa. Clariant GmbH, Naphthalin-Sulfonsäure-Formaldehyd-Kondensationsprodukt-Natriumsalz (z.B. Morwet® D 425 der Witco oder Tamol® NN 8906 der Fa. BASF), Natriumpolycarboxylat (z.B. Sopropan® T 36 der Fa. Rhodia GmbH).

Geeignete Polyvinylalkohole werden durch Teilverseifung von Polyvinylacetat hergestellt. Sie weisen einen Hydrolysegrad von 72 bis 99 Mol-% und eine Viskosität von 2 bis 18 cP (gemessen in 4 %-iger wäßriger Lösung bei 20°C, entsprechend DIN 53 015) auf. Vorzugsweise verwendet man teilverseifte Polyvinylalkohole mit einem Hydrolysegrad von 83 bis 88 Mol-% und niedriger Viskosität, insbesondere von 3 bis 5 cP.

Die wäßrige Phase der Dispersionen enthält_gegebenenfalls mindestens ein weiteres Formulierungshilfsmittel aus der Reihe der Netzmittel, der Frostschutzmittel, der Verdickungsmittel, der Konservierungsmittel und dichteerhöhenden Bestandteile.

Als Netzmittel kommen beispielsweise Vertreter aus den Stoffgrupen der alkylierten Naphthalinsulfonsäuren, der N-Fettacyl-N-alkyltauride, der Fettacylamidoalkylbetaine, der Alkylpolyglycoside, der alpha-Olefinsulfonate, der Alkylbenzolsulfonate, der Ester der Sulfobemsteinsäure, der (Oligo)-Alkylphenolethoxylate, der Fettalkohole-(C₈-C₂₂)-Ethoxylate und der (ggf. durch Alkylenoxy-Gruppen modifizierten) Fettalkylsulfate in Frage. Der Anteil liegt hier zwischen 0 und 5 Gew.-%, bevorzugt zwischen 0 und 2 Gew.-%, bezogen auf die Gesamtformulierung.

Geeignete Handelsprodukte sind beispielsweise Darvan® Nr. 3, Vanisperse® CB, Hoe S1728 (Clartiant GmbH), Luviskol® K 30, Reserve C, Forianit® P, Sokalan® CP 10, Maranil A, Genapol® PF 40, Genapol® LRO, Genapol®-T, Genapol®-X, Genapol®-O, Tributylphenolpolyglykolether, wie die Sapogenat T-Marken (Clariant GmbH), Nonylphenolpolyglykolether, wie die Arkopal® N-Marken (Clariant GmbH) oder Tristyrylphenolpolyglykolether-Derviate.

Als Konservierungsmittel können den wäßrigen Dispersionen folgende Mittel zugesetzt werden: Formaldehyd oder Hexahydrotriazinderivate wie z.B. Mergal® KM 200 der Firma Riedel de Haen oder Cobate® C der Firma Rhone Poulenc, Isothiazolinon-Derivate, wie z.B. Mergal® K9N der Firma Riedel de Haen oder Kathon® CG der Firma Rohm u. Haas, 1,2-Benzisothiazolin-2-one wie z.B. Nipacide® BIT 20 der Fa. Nipa Laboratorien GmbH oder Mergal® K10 der Firma Riedel de Haen oder 5-Brom-5-nitro-1,3-dioxan (Bronidox® LK der Fa. Henkel). Der Anteil dieser Konservierungsmittel beträgt maximal 2 Gew.-% bezogen auf die Gesamtformulierung.

Geeignete Frostschutzmittel sind beispielsweise ein- oder mehrwertige Alkohole, Glykolether oder Harnstoff, insbesondere Calciumchlorid, Glycerin, Isopropanol, Propylenglykolmonomethylether, Di- oder Tripropylenglykolmonomethylether oder Cyclohexanol. Der Anteil dieser Frostschutzmittel beträgt maximal 20 Gew.-% bezogen auf die Gesamtdispersion.

Verdickungsmittel können anorganischer oder organischer Natur sein; sie können auch kombiniert werden. Geeignet sind z.B. solche auf Aluminiumsilikat-, Xanthan-, Methylcellulose-, Polysaccharid-, Erdalkalisilikat-, Gelatine- und Polyvinylalkohol-Basis, wie beispielsweise Bentone® EW, Vegum®, Rodopol® 23 oder Kelzan® S. Ihr Anteil beträgt 0,3 Gew.-%, vorzgusweise 0 - 0,5 Gew.-% bezogen auf die Gesamtdispersion.

Die Erfindung betrifft auch ein Verfahren zur Herstellung der erfindungsgemäßen Mikrokapseldispersionen, das dadurch gekennzeichnet ist, daß man zunächst eine grobe Voremulsion aus organischer und wäßriger Phase (ohne Diamin) herstellt, und diese anschließend Scherkräften aussetzt, indem man sie vorzugsweise über ein kontinuierlich arbeitendes Mischorgan gibt, beispielsweise einen statischen Mischer, eine Zahnkolloidmühle oder ähnliches. Durch diesen Schritt erst entsteht die zur späteren Mikrokapselbildung nötige Feinteiligkeit der emulgierten Öltröpfchen. Zum Schluß wird, gegebenenfalls nach Zugabe eines Diamins, durch Polyreaktion im gesamten Stoffvolumen ausgehärtet. Alternativ wird auf die Zugabe der wasserlöslichen Polyamins verzichtet, und die fertige Emulsion wird über eine bestimmte Zeit bei einer geeigneten Temperatur gerührt, beispielsweise 6 h bei 70°C.

Anstelle der Mikroverkapselung ist es zur Herstellung einer controlled-release-Kombination auch möglich, den Wirkstoff in eine organische Matrix wie beispielsweise Wachs einzubringen. Auch können anorganische Matrices verwendet werden, beispielsweise Silikate, Alumosilikate oder Aluminiumoxide bzw. Mineralien, die auf diesen vorgenannten Materialien basieren. Beim Einbinden in eine solche organische oder anorganische Matrix werden die agrochemischen Wirkstoffe physikalisch gebunden.

Mögliche Freisetzungsmechanismen sind etwa der abiotische und/oder der biotische Abbau (Verwitterung), das Aufplatzen der Matrix oder der Kapselwände, oder das Herausdiffundieren bzw. Herauslösen des Wirkstoffs aus der Matrix bzw. den Kapseln. Das kann in Abhängigkeit von dem Kontakt mit Flüssigkeiten, wie beispielsweise Wasser, oder in Abhängigkeit von der Temperatur geschehen.

Die Freisetzung der Hauptmenge des Wirkstoffs aus der Matrix bzw. den Mikrokapseln erfolgt im allgemeinen innerhalb der ersten 4 Wochen nach der Applikation, vorzugsweise innerhalb der ersten 7 Tage, insbesondere innerhalb der ersten 2 Tage.

Wirkstoffe, die nicht kontrolliert freigesetzt werden, können entweder als Handelsprodukte eingesetzt werden, oder nach Technologien, die im Prinzip bekannt sind, formuliert werden und im Tank mit den entsprechenden controlled-release-Formulierungen kombiniert werden.

Bei allen vorstehend genannten agrochemischen Wirkstoffen können selbstverständlich auch gegebenenfalls die entsprechenden, dem Fachmann als zum Einsatz geeignet bekannten Derivate wie Säuren, Ester oder Salze der Wirkstoffe verwendet werden.

Die erfindungsgemäßen Kombinationen gestatten eine Unterdrückung der Antagonisierung anderer Wirkstoffe in Mischungen mit diesen. Erfindungsgemäß zu kombinierende Wirkstoffe lassen sich daher im Gemisch mit anderen Wirkstoffen, gegebenenfalls zusammen mit den üblichen Zusatzstoffen und Adjuvantien, einsetzen. Beispiele für bevorzugte erfindungsgemäße Kombinationen werden nachstehend beschrieben. In all diesen Kombinationen ist der Einsatz der oben als besonders oder meistgeeignet beschriebenen Wirkstoffe selbstverständlich ebenfalls bevorzugt, auch wenn dies nicht extra erwähnt wird.

Die mit dem erfindungsgemäß eingesetzten Trägem kombinierten agrochemischen Wirkstoffe lassen sich mit anderen, gegebenenfalls auch gemäß der vorliegenden Erfindung mit geeigneten Trägem kombinierten Wirkstoffen, zu Mischungen formulieren, die vorteilhafte Resultate ergeben.

In vielen Fällen ist der Zusatz von Adjuvantien oder Adjuvant-Mischungen, beispielsweise von Ölen, Solventien, Tensiden oder Tensidgemischen vorteilhaft. Dabei sollen unter Adjuvantien solche Zusätze zu Wirkstoff-Polymer-Kombinationen verstanden werden, die selber nicht aktiv sind, aber die Wirkstoffeigenschaften verstärken. Es eignen sich nichtionische Tenside, beispielsweise solche der allgemeinen Formel RO(CH₂CH₂O)ₙH, worin R ein (C₁₀-C₂₂)-Fettalkohol-, Tristyrylphenol-, Tributylphenol-, (C₁-C₁₄)-Alkylphenol-, Tridecylalkohol-, Glycerid- oder von Rizinusöl abgeleiteter Rest ist und n eine ganze Zahl von 1 - 500, vorzugsweise von 3 - 200 ist.

Solche Substanzen sind beispielsweise erhältlich als Genapol-® Sapogenat-® und Arkopol® Reihe der Clariant GmbH und als Soprophor-Reihe der Rhodia GmbH. Ebenfalls lassen sich Blockcopolymere auf Basis Ethylenoxid, Propylenoxid und/oder Butylenoxid einsetzen, beispielsweise die unter den Namen Pluronics® oder Tetronics® von der BASF AG vertriebenen Verbindungen.

Auch anionische oder betainische Tenside lassen sich verwenden. Beispiele für anionische Tenside umfassen Ca-Dodecylbenzylsulfonat, Succinate, phosphatierte, sulfatierte und sulfonierte nichtionische Tenside, etwa solche des vorstehend genannten Typs, und Sorbitan-Derviaten wie Sorbitate, wobei diese anionischen Verbindungen mit Alkali-, Erdalkali- oder Ammoniumionen neutralisiert sind. Solche Tenside sind etwa unter dem Namen Genapol® LRO (Clariant GmbH) erhältlich.

Ebenfalls geeignet sind kationische Tenside, beispielsweise solche auf Basis quatemärer Ammonium-, Phosphonium- und tertiärer Sulfoniumsalze, beispielsweise Atlas® G3634 A der Uniquema.

Die Menge an Tensid liegt dabei bei Werten von 10 bis 2.000 g/ha, vorzugsweise von 50 bis 2.000 g/ha. Auch der Zusatz von Stickstoffgaben wie z.B. Harnstoff, Ammoniumnitrat, Ammoniumsulfat, Ammoniumhydrogensulfat oder Mischungen davon ist häufig vorteilhaft.

Beispielhaft werden in der nachfolgenden Tabelle Formulierungen mit erfindungsgemäßen Kombinationen beschrieben. Dabei sind als Träger Polyharnstoffe bevorzugt. In der Anwendung kann es vorteilhaft sein, daß weitere Wirkstoffe mit den in der Tabelle genannten Formulierungen appliziert werden.

| Wirkstoff 1 (mit Träger ganz oder teilweise kombiniert) | Wirkstoff 2 (nicht kombiniert) | Sonstige Zusätze |
|---|---|---|
| Safener wie Mefenpyrdi-Ethylester (10-50 g/ha) | Fettsäuresynthetase-Inhibitoren wie (Hetero)aryloxyphenoxyal kylcarbonsäuren und Cydohexandionoxime, z.B. Fenoxyprop-p-ethyl (20-100 g/ha) | Zugabe von Adjuvantien, z.B. Genapol® LRO ist vorteilhaft |
| Safener wie 5,5-Biphenyl-2-Isoxalin-3-carbon-säure bzw. deren Salze oder Ester | Fettsäuresynthetase-Inhibitoren wie (Hetero)aryloxyphenoxyal kylcarbonsäuren und Cydohexand ionoxime, z.B. Fenoxaprop-p-ethyl | Zugabe von Adjuvantien, z.B. Genapol LRO ist vorteilhaft |
| Bromoxynil oder chemische Derivate (Ester, Salze) in Kombination mit Safenem wie z.B. Mefenpyrdiethyl | Fettsäuresynthetase-Inhibitoren wie (Hetero)aryloxyphenoxyal kylcarbonsäuren und Cyclohexandionoxime, z.B. Fenoxyprop-p-Ethyl | Zugabe von Adjuvantien, z.B. Genapol® LRO ist vorteilhaft |
| Aryloxyalkylcarbonsäuren oder chemische Derivate (Ester, Salze) wie z.B. 2,4-D in Kombination mit Safenem wie z.B. Mefenpyrdiethyl | Fettsäuresynthetase-Inhibitoren wie (Hetero)aryloxyphenoxyal kylcarbonsäuren und Cyclohexandionoxime z.B. Fenoxaprop-p-ethyl | Zugabe von Adjuvantien, z.B. Genapol® LRO ist vorteilhaft |
| Bromoxynil oder chemische Derivate (Ester, Salze) in Kombination mit Safenem wie z.B. Mefen-pyrdiethyl | Fettsäuresynthetase-Inhibitoren wie (Hetero)aryloxyphenoxyal kylcarbonsäuren und Cyclohexandionoxime, z.B. Fenoxyprop-p-ethyl in Kombination mit einem Sulfonylhamstoff, wie z.B. Metsulfuron oder Iodosulfuron | Zugabe von Adjuvantien, z.B. Genapol® LRO ist vorteilhaft |
| Fettsäuresynthese-Inhibitoren wie z.B. Fenoxaprop-p-ethyl | Safener wie z.B. 5,5-Biphenyl-2-isoxazolin-3-carbonsäureethylester | Zugabe von Adjuvantien, z.B. Genapol® LRO oder/und Stickstoff-Dünger (z.B. Ammoniumsulfat, Ammoniumhydrogensulfat, Harnstoff) ist vorteilhaft |

Der Anteil der Wirkstoffe in den verschiedenen Formulierungen kann in weiten Bereichen variiert werden. Beispielsweise enthalten die Formulierungen etwa 0,1 bis 95 Gew.-% Wirkstoffe, etwa 90 - 10 Gew.-% flüssige oder feste Trägerstoffe sowie gegebenenfalls bis zu 30 Gew.-% oberflächenaktive Stoffe, wobei die Summe dieser Anteile 100 % ergeben sollten.

Die erfindungsgemäß hergestellten Gemische mit Trägermatieral, einem oder mehreren Wirkstoffen sowie den möglichen Adjuvantien und anderen Hilfsstoffen können als separate Tankmischung vorliegen, jedoch auch in anderen Formulierungen.

Als Formulierungsmöglichkeiten kommen dabei beispielsweise in Frage:

Spritzpulver (WP), wasserlösliche Pulver (SP), Suspensionskonzentrate (SC) auf Öl- oder Wasserbasis, wasserlösliche Konzentrate (SL), emulgierbare Konzentrate (EC), Micro- und Macro-Emulsionen (EW/ME) wie Öl-in-Wasser- und Wasser-in-Öl-Emulsionen, versprühbare Lösungen, Suspensionsemulsionen (SE), ölmischbare Lösungen, Kapselsuspensionen (CS), Stäubemittel (DP), Beizmittel, Granulate für die Streu- und Bodenapplikation, Granulate (GR) in Form von Mikro-, Sprüh-, Aufzugs- und Adsorptionsgranulaten, wasserdispergierbare Granulat (WDG), wasserlösliche Granulate (WSG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie", Band 7, C. Hanser Verlag München, 4. Aufl., 1986, Wade van Valkenburg, "Pesticide Formulations", Marcel Dekker, N.Y., 1973; K. Martens, "Spray Drying" Handbook, 3^{rd} Ed. 1979, G. Goodwin Ltd. London.

Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2^{nd} Ed., Darland Books, Caldwell N.J., H.v.Olphen, "Introduction to Clay Colloid Chemistry"; 2^{nd} Ed., J. Wiley & Sons, N.Y.; C. Marsden, "Solvents Guide", 2^{nd} Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hanser Verlag München, 4. Aufl. 1986.

Spritzpulver sind in Wasser gleichmäßig dispergierbare Präparate, die neben der erfindungsgemäßen Kombination außer einem Verdünnungs- oder Inertstoff noch Tenside ionischer und/oder nichtionischer Art (Netzmittel, Dispergiermittel), z.B. polyoxyethylierte Alkylphenole, polyoxyethylierte Fettalkohole, polyoxyethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalinsulfonsaures Natrium oder auch oleoylmethyltaurinsaures Natrium enthalten. Zur Herstellung der Spritzpulver werden die Wirkstoffe in üblichen Apparaturen wie Hammermühlen, Gebläsemühlen und Luftstrahlmühlen feingemahlen und gleichzeitig oder anschließend mit den Formulierungshilfsmitteln sowie den erfindungsgemäß verwendeten Polymeren vermischt.

Emulgierbare Konzentrate werden durch Auflösen der Wirkstoff in Kombination mit Polymer in einem organischen Lösungsmittel, z.B. Butanol, Cyclohexanon, Dimethylformamid, Xylol oder auch höhersiedenden Aromaten oder Kohlenwasserstoffen oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: alkylarylsulfonsaure Calcium-Salze wie Ca-Dodecylbenzolsulfonat oder nichtionische Emulgatoren wie Alkylarylpolyglykolether, die von para-Alkylphenolethoxylaten verschieden sind, Fettsäurepolyglykolester, Fettalkoholpolyglykolether, Propylenoxid-Ethylenoxid-Kondensationsprodukte, Alkylpolyether, Sorbitanester z.B. Sorbitanfettsäureester oder Polyoxyethylensorbitanester z.B. Polyoxyethylensorbitanfettsäureester.

Stäubemittel erhält man durch Vermahlen des Wirkstoffes in Kombination mit erfindungsgemäß einsetzbaren Polymeren mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis aufgebaut sein. Sie können beispielsweise durch Naß-Vermahlung mittels handelsüblicher Perlmühlen und gegebenenfalls Zusatz von Tensiden, wie sie oben bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls Tensiden, wie sie z.B. oben bei den anderen Formulierungstypen bereits aufgeführt sind, herstellen.

Granulate können entweder durch Verdüsen des Wirkstoffes in Kombination mit erfindungsgemäß einsetzbarem Polymer auf adsorptionsfähiges, granuliertes Inertmaterial hergestellt werden oder durch Aufbringen der Kombination mittels Klebemitteln, z.B. Zucker wie Pentosen und Hexosen oder auch Mineralölen, auf die Oberfläche von Trägerstoffen wie Sand, Kaolinite oder von granuliertem Inertmaterial. Auch können geeignete Wirkstoffe in Kombination mit erfindungsgemäß einsetzbarem Polymer in der für die Herstellung von Düngemittelgranulaten üblichen Weise - gewünschtenfalls in Mischungen mit Düngemitteln - granuliert werden.

Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischem und Extrusion ohne festes Inertmaterial hergestellt.

Zur Herstellung von Teller-, Fließbett-, Extruder- und Sprühgranulaten siehe z.B. die Verfahren in "Spray-Drying Handbook" 3^{rd} ed. 1979, G. Goodwin Ltd., London; J.E.

Browning, "Agglomeration", Chemical and Engineering 1967, Seiten 147 ff; "Perry's Chemical Engineer's Handbook", 5^{th} Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5^{th} Ed., Blackwell Scientific Publications, Oxford, 1968, Seiten 101-103.

Daneben enthalten die genannten Formulierungen mit den erfindungsgemäßen Kombinationen gegebenenfalls die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Auf der Basis dieser Formulierungen lassen sich auch Mischungen mit anderen pestizid wirksamen Stoffen, wie Herbiziden, Insektiziden, Fungiziden, sowie

Antidots oder Safenern, Düngemitteln und/oder Wachstumsregulatoren herstellen, z.B. in Form einer Fertigformulierung oder für den Einsatz als Tankmischungen.

Die erfindungsgemäßen Kombinationen weisen eine ausgezeichnete Wirksamkeit auf. Im Falle des Kombinierens von Herbiziden mit Polymeren zu den erfindungsgemäßen Kombinationen weisen diese eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Samen oder Rhizomen, Wurzelstöcken oder anderen Dauerorganen austreiben, werden durch die Wirkstoffkombinationen gut erfaßt. Dabei ist es gleichgültig, ob erfindungsgemäße Kombinationen im Vorsaat-, Vorauflauf- oder Nachauflaufverfahren ausgebracht werden. Vorzugsweise werden die erfindungsgemäßen Kombinationen auf oberirdische Pflanzenteile appliziert. Die erfindungsgemäßen Kombinationen eignen sich auch zur Dessikkation von Kulturpflanzen wie Kartoffel, Baumwolle und Sonnenblume.

Die erfindungsgemäßen Kombinationen können im Fall von herbiziden Wirkstoffen zum Beispiel zur Bekämpfung folgender Schadpflanzen verwendet werden:

Dikotyle Unkräuter der Gattungen Sinapis, Galium, Stellaria, Matricaria, Galinsoga, Chenopodium, Brassica, Urtica, Senecio, Amaranthus, Portulaca, Xanthium, Convolvulus, lpomoea, Polygonum, Sesbania, Cirsium, Carduus, Sonchus, Solanum, Lamium, Veronica, Abutilon, Datura, Viola, Monochoria, Commalina, Sphenoclea, Aeschynomene, Heteranthera, Papaver, Euphorbia und Bidens.

Monokotyle Unkräuter der Gattungen Avena, Alopecurus, Echinochloa, Setaria, Panicum, Digitaria, Poa, Eleusine, Brachiaria, Lolium, Bromus, Cyperus, Elytrigia, Sorphum, Apera und Scirpus.

Werden die die erfindungsgemäßen Kombinationen enthaltenden herbiziden Mittel vor dem Keimen appliziert, so wird entweder das Auflaufen der Unkrautkeimlinge vollständig verhindert, oder die Unkräuter wachsen bis zum Keimblattstadium heran, stellen jedoch dann ihr Wachstum ein und sterben schließlich nach Ablauf von drei bis vier Wochen vollkommen ab.

Bei Applikation dieser die erfindungsgemäßen Kombinationen enthaltenden herbiziden Mittel auf die grünen Pflanzenteile im Nachauflaufverfahren tritt ebenfalls rasch nach der Behandlung ein drastischer Wachstumsstopp ein. Die Unkrautpflanzen bleiben in dem zum Applikationszeitpunkt vorhandenen Wachstumsstadium stehen oder sterben nach einer gewissen Zeit mehr oder weniger schnell ab, so daß auf diese Weise eine für Kulturpflanzen schädliche Unkrautkonkurrenz sehr früh und nachhaltig durch den Einsatz der neuen erfindungsgemäßen Kombinationen verhindert werden kann und auch damit verbundene quantitative und qualitative Ertragseinbußen.

Obgleich diese erfindungsgemäßen Kombinationen eine ausgezeichnete herbizide Aktivität gegenüber mono- und dikotylen Unkräutern aufweisen, wird die Kulturpflanze nur unwesentlich oder gar nicht geschädigt.

Diese Effekte erlauben unter anderem eine Reduzierung der Aufwandmenge, die Bekämpfung eines breiteren Spektrums von Unkräutern und Ungräsem, die Schließung von Wirkungslücken, auch hinsichtlich resistenter Arten, eine schnellere und sicherere Wirkung, eine längere Dauerwirkung, eine komplette Kontrolle der Schadpflanzen mit nur einer oder wenigen Applikationen, und eine Ausweitung des Anwendungszeitraumes bei mehreren gleichzeitig anwesenden Wirkstoffen.

Die genannten Eigenschaften sind in der praktischen Unkrautbekämpfung gefordert, um landwirtschaftliche Kulturen von unerwünschten Konkurrenz-pflanzen freizuhalten und damit die Erträge qualitativ und quantitativ zu sichern und/oder zu erhöhen. Der technische Standard wird durch die erfindungsgemäßen Kombinationen bezüglich der beschriebenen Eigenschaften deutlich übertroffen.

Darüber hinaus gestatten die erfindungsgemäßen Kombinationen in hervorragender Weise die Bekämpfung ansonsten resistenter Schadpflanzen.

Aufgrund ihrer agrochemischen Eigenschaften, vorzugsweise herbiziden, pflanzenwachstumsregulatorischen und Safener-Eigenschaften, können die bevorzugt in herbiziden Mitteln eingesetzten erfindungsgemäßen Kombinationen auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z.B. das Emtegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Emteguts bekannt.

Bevorzugt ist die Anwendung der erfindungsgemäßen Kombinationen in wirtschaftlich bedeutenden transgenen Kulturen von Nutz- und Zierpflanzen, z.B. von Getreide wie Weizen, Gerste, Roggen, Hafer, Hirse, Reise, Maniok und Mais oder auch Kulturen von Zuckerrübe, Baumwolle, Soja, Raps, Kartoffel, Tomate, Erbse und anderen Gemüsesorten.

Vorzugsweise können die erfindungsgemäßen Kombinationen mit Herbiziden, Pflanzenwachstumsregulatoren und/oder Safenem in Nutzpflanzenkulturen eingesetzt werden, welche gegenüber den phytotoxischen Wirkungen der Herbizide resistent sind bzw. gentechnisch resistent gemacht worden sind.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z.B. EP-A-0 221 044, EP-A-0 131 624). Beschrieben wurden beispielsweise in mehreren Fällen
- gentechnische Veränderungen von Kulturpflanzen zwecks Modifikation der in den Pflanzen synthetisierten Stärke (z.B. WO 92/11376, WO 92/14827, WO 91/19806),
- transgene Kulturpflanzen, welche gegen bestimmte Herbizide vom Typ Glufosinate (vgl. z.B. EP-A-0 242 236, EP-A-0 242 246) oder Glyphosate (WO 92/00377) oder der Sulfonylharnstoffe (EP-A-0 257 993, US-A-5,013,659) resistent sind,
- transgene Kulturpflanzen, beispielsweise Baumwolle mit der Fähigkeit Bacillius thuringiensis-Toxine (Bt-Toxine) zu produzieren, welche die Pflanzen gegen bestimmte Schädlinge resistent machen (EP-A-0 142 924, EP-A-0 193 259),
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., Molecular Cloning, A. Laboratory Manual, 2.

Aufl. Cold Spring Harbor Laboratory Press, Cold Spring Harbor, NY, oder Winnacker "Gene und Klone", VCH Weinheim 2. Auflage 1996 oder Christou, "Trends in Plant Science" 1 (1996) 423-431.

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z.B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eins Genprodukts einschließlich eventuell vorhandener flankierender Sequenzen umfassen, zum anderen auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z.B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Aca. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen.

So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Vorzugsweise können die erfindungsgemäßen Kombinationen in transgenen Kulturen eingesetzt werden, welche gegen Herbizide aus der Gruppe der Sulfonylharnstoffe, Glufosinate-ammonium oder Glyphosate-isopropylammonium und analoge Wirkstoffe resistent ist.

Bei der Anwendung der erfindungsgemäßen Kombinationen, insbesondere von solchen, die in herbiziden Mitteln sind, in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind; beispielsweise ein verändertes oder speziell erweitertes Unkrautspektrum, das bekämpft werden kann; veränderte Aufwandmenge, die für die Applikation eingesetzt werden kann; vorzugsweise gute Mischbarkeit oder Mitverwendbarkeit mit solchen Herbiziden, gegenüber denen die transgene Kultur resistent ist; sowie Beeinflussung von Wuchs und Ertrag der transgenen Kulturpflanzen.

Die Erfindung wird nun in den nachfolgenden Beispielen zusätzlich erläutert.

In den Beispielen 1-17 werden Kombinationen von Wirkstoffen mit geeigneten Trägem beschrieben.

### Beispiel 1

10,7 g Fenoxapro-p-ethyl (93,6 % D+) wurden in in 40,0 Solvesso® 200 gelöst, danach 3,0 % Voranate® M220 (Dow Chemicals techn. Methylendiphenyldiisocyanat) bis zur vollständigen Homogenität eingerührt. Weiterhin wurde eine wässrige Lösung bestehend aus 2,0 g Mowiol® 3-83 (Clariant, Polyvinylalkohol) 1,8 g Genapol® V4829 (Clariant, Ethylenoxid/Propylenoxid-Copolymer),
0,5 % Morwet® D425 (Witco, Naphthalinsulfonsäure/Formaldehyd-Kondensat), 0,1 g Rodorsil® 432 (Rhodia, Entschäumer auf Siliconbasis), 0,1 g Mergal® K9N (Konservierungsmittel) sowie 36,3 g Wasser hergestellt. In einem 250 ml-Dreihalskolben, bestückt mit Tropftrichter und Rührmotor/Blattrührer, wurde die wässrige Phase vorgelegt, und unter heftigem Rühren die organische Phase möglichst schnell zugegeben.

Nach ca. 0,5 wurde die Rührgeschwindigkeit reduziert und eine wässrige Lösung aus 1,5 g Hexamethylendiamin in 2 g Wasser aus einer Spritze zügig zudosiert. Kurz danach wurden 4,0 g techn. Glycerin zugegeben.

Das Rühren wurde bei der selben Geschwindigkeit noch 4 h bei Raumtemperatur fortgesetzt, und die fertige Mikrokapseldispersion abgefüllt.

Man erhielt eine Mikrokapseldispersion mit 10 % Fenoxaprop-p-ethyl. Die Viskosität lag bei 600 mPa•s (100 sec), der mittlere Kapseldurchmesser lag bei 3 µm.

### Beispiele 2-14

In analoger Weise können zu Beispiel 1 die folgenden Mikrokapseldispersionen erhalten werden.

| Beispiel | Wirkstoff (Mikrokapsel) | Beladung (% Wirkstoff) | Kapselgröße (Durchschnitt: 10⁶m) | Isocyanatmenge (%) |
|---|---|---|---|---|
| 2 | Fenoxaprop-p-ethyl | 10 | 2,6 | 1 |
| 3 | Fenoxaprop-p-ethyl | 10 | 2,1 | 3 |
| 4 | Fenoxaprop-p-ethyl | 10 | 1.6 | 5 |
| 5 | Bromoxynil-octanoat *) | 10 | 2,0 | 1 |
| 6 | Bromoxynil-octanoat *) | 10 | 2,1 | 5 |
| 7 | 2,4 D-isobutylester *) | 10 | 1 | 5 |
| 8 | 2,4 D-isobutylester *) | 10 | 5 | 5 |
| 9 | MCPA-Isooctylester *) | 10 | 5 | 1 |
| 10 | MCPA-Isooctylester *) | 10 | 2,5 | 1 |
| 11 | Mefenpyrdiethyl | 10 | 3,25 | 1 |
| 12 | Mefenpyrdiethyl | 10 | 16,6 | 1 |
| 13 | 5,5-Biphenyl-2-isoxalin-3-carbonsäure | 10 | 3,1 | 1 |
| 14 | 5,5-Biphenyl-2-isoxalin-3-carbonsäure | 10 | 2,9 | 5 |

| | | | | |
|---|---|---|---|---|
| *) nicht erfindungsgemäß | | | | |

### Beispiel 15

Herstellung einer EC-Formulierung von Fenoxaprop-p-ethyl.

8,2 % Fenoxaprop-p-ethyl, 53 % Solvesso®, 16 % N-Methylpyrrolidon, 8,4 % Genapol®, X-060, 6,5 % Emulsagen 1816, 3,2 % Phenylsulfonat Ca 70 und 4,3 % Edenol® D-81 werden miteinander vermischt.

### Beispiel 16

Herstellung einer EC-Formulierung von 5,5-Biphenyl-2-isoxazolin-3-Carbonsäure.

8 % 5,5-Biphenyl-2-isoxalin-3-carbonsäure, 53,5 % Solvesso®, 16,1 % N-Methylpyrrolidon, 8,4 % Genapol®, X-060, 6,5 % Emulsagen 1816, 3,2 % Phenylsulfonat Ca 70 und 4,3 % Edenol® D-81 werden zusammengegeben und vermischt.

### Beispiel 17

Herstellung einer EC-Formulierung von Mefenpyrdiethylester.

8 % Mefenpyrdiethylester, 53,5 % Solvesso®, 16.1 % N-Methylpyrrolidon, 8,4 % Genapol® X-060, 6,5 % Emulsogen 1816, 3,2 % Phenylsulfonat Ca 70 und 4,3 % Edenol® D-81 werden zusammengegeben und miteinander vermischt.

Die Beispiele 18-21 beschreiben die Applikation von erfindungsgemäßen Kombinationen enthaltenden Wirkstofformulierungen.

In diesen Beispielen 18-21 wurden Samen bzw. Rhizomstücke Mono- und Dikotyler Schad- und Nutzpflanzen in Töpfen von 9 - 13 cm Durchmesser in sandiger Lehmerde ausgelegt und mit Erde bedeckt. Die Töpfe wurden im Gewächshaus unter optimalen Bedingungen gehalten. Im Zwei- bis Dreiblattstadium, d.h. etwa 3

Wochen nach Beginn der Aufzucht, wurden die Versuchspflanzen mit den erfindungsgemäßen Wirkstoffkombinationen in Form wäßriger Dispersionen oder

Suspensionen bzw. Emulsionen behandelt und mit einer Wasseraufwandmenge von umgerechnet 300 l/ha in unterschiedlichen Dosierungen auf die grünen Pflanzenteile besprüht. Die Töpfe wurden zur weiteren Kultivierung der Pflanzen im Gewächshaus unter optimalen Bedingungen gehalten. Die optische Bewertung der Schäden an Nutz- und Schadpflanzen erfolgte 2 - 3 Wochen nach der Behandlung.

### Beispiel 18

Die Formulierung nach Beispiel 2 (60 g/ha) und die Formulierung nach Beispiel 17 (15 g/ha) werden zusammen auf Weizenkulturen zur Graskontrolle appliziert. Gegenüber der gleichen Formulierung ohne die erfindungsgemäße Trägerkombination beobachtet man eine bessere Ungrasbekämpfung.

### Beispiel 19

Die Formulierung nach Beispiel 2 (30 g/ha) wird mit der Formulierung gemäß Beispiel 15 (30 g/ha) und der Formulierung nach Beispiel 17 (15 g/ha) vermischt und auf Weizenkulturen zur Graskontrolle appliziert. Man beobachtet eine bessere Bekämpfung des Ungrases als bei einer Formulierung, die die gleichen Wirkstoffe, jedoch ohne die erfindungsgemäße Kombination, enthält.

### Beispiel 20

Ein Gemisch enthaltend die Formulierung gemäß Beispiel 2 (60 g/ha) sowie der Formulierung nach Beispiel 16 (60 g/ha) wird auf Reiskulturen zur Gras- und Unkrautkontrolle appliziert. Gegenüber einer Formulierung enthaltend die gleiche Wirkstoffkombination, jedoch ohne die erfindungsgemäße Kombination, beobachtet man eine bessere Ungras-/Unkrautbekämpfung.

### Beispiel 21

Ein Gemisch aus einer Formulierung gemäß Beispiel 15 (60 g/ha), der Formulierung gemäß Beispiel 11 (15 g/ha) sowie der Formulierung gemäß Beispiel 5 (300 g/ha) wird auf Weizenkulturen zur Gras- und Unkrautkontrolle appliziert. Gegenüber einer Formulierung, die die gleichen Wirkstoffe in der gleiche Menge enthält, jedoch nicht die erfindungsgemäße Kombination aufweist, beobachtet man eine bessere Unkraut- und Ungrasbekämpfung.

### Beispiel 22

Ein Gemisch aus einer Formulierung gemäß Beispiel 15 (60 g/ha Fenoxaprop-p-ethyl), der Formulierung gemäß Beispiel 16 (60 g/ha Isoxadiphen-ethyl) sowie der Formulierung gemäß Beispiel 1 (40 g/ha Fenoxaprop-p-ethyl) wird auf Reiskulturen zur Graskontrolle appliziert. Gegenüber einer Formulierung, die die gleichen Wirkstoffe in der gleichen Menge enthält, jedoch nicht die erfindungsgemäße Kombination aufweist, beobachtet man eine bessere Unkraut- und Ungrasbekämpfung.

## Patentansprüche

1. Verwendung einer Controlled-release-Kombination aus einem agrochemischen Wirkstoff und einem den Wirkstoff umgebenden Träger zur Unterdrückung von antagonistischen Wechselwirkungen in einem Gemisch aus dem mit dem Trägermaterial umgebenen Wirkstoff und mindestens einem weiteren agrochemischen Wirkstoff, wobei mindestens einer der agrochemischen Wirkstoffe ein Herbizid aus der Gruppe bestehend aus (Hetero)-aryloxy-aryoxyalkylcarbonsäuren, vorzugsweise Fenoxaprop-p-Ethyl, Dichlofop, Clodinafop-Propargyl, Fluazifop, Cyclohexandionoxime, vorzugsweise Sethoxidim, Clethodim oder Trialkoxidim, und mindestens einer ein Safener ist.

2. Verwendung nach Anspruch 1, worin das Herbizid ganz oder teilweise mit dem Träger kombiniert ist.

3. Verwendung nach Anspruch 1 oder 2, **dadurch gekennzeichnet, daß** die Safener ausgewählt sind aus der Gruppe bestehend aus Mefenpyrdiethylester und 5,5-Biphenyl-2-Isoxazolin-3-carbonsäure.

4. Verwendung nach einem der Ansprüche 1 bis 3, **dadurch gekennzeichnet, daß** das Trägermaterial ausgewählt ist aus der Gruppe bestehend aus Materialien synthetischer und natürlicher Herkunft und organischer und anorganischer Natur, vorzugsweise Polymeren natürlicher und synthetischer Herkunft, Wachs, Silikaten, Alumosilikaten, Aluminiumoxiden und Mineralien, die auf diesen Materialien basieren.

5. Verwendung nach Anspruch 4, **dadurch gekennzeichnet, daß** der Wirkstoff von Mikrokapseln als Träger umgeben ist, vorzugsweise von Mikrokapseln, die aufgebaut sind aus Polyharnstoffen, Polyurethanen, Polyamiden, Melaminharzen, Gelatine, Wachs und/oder Stärke.

6. Verwendung nach Anspruch 5, **dadurch gekennzeichnet, daß** die Polyurethane und die Polyharnstoffe aus Isocyanat-Präpolymeren hergestellt werden, vorzugsweise aus 2,4-Toluylendiisocyanat, 2,6-Toluylendiisocyanat, 4,4'-Methylendi(phenylisocyanat) oder Hexamethylendiisocyanat.

7. Verwendung nach Anspruch 5 oder 6, **dadurch gekennzeichnet, daß** die Mikrokapseln durch Grenzflächen-Polykondensation oder Coacervation hergestellt werden.

8. Formulierung enthaltend eine Kombination nach einem der Ansprüche 1 bis 3 sowie mindestens einen weiteren Bestandteil aus der Gruppe bestehend aus agrochemischen Wirkstoffen, Tensiden, Düngern sowie üblichen Adjuvantien, worin das Herbizid ein Fettsäuresynthetase-Inhibitor ist, und worin das Herbizid oder der Safener mit einem Trägermaterial umgeben ist.

9. Formulierung nach Anspruch 8, **dadurch gekennzeichnet, daß** eine Kombination aus einem Herbizid und einem Trägermaterial zusammen mit einem Safenern vorliegt.

10. Verfahren zur Bekämpfung von Schadorganismen, insbesondere von Schadpflanzen, **dadurch gekennzeichnet, daß** eine Formulierung nach Anspruch 8 oder 9 in an sich bekannter Weise appliziert wird.

11. Verfahren zur Herstellung einer Formulierung nach Anspruch 8 oder 9, **dadurch gekennzeichnet, daß** der Wirkstoff durch übliche, an sich bekannte Verfahren, vorzugsweise Lösen, Rühren oder Vermischen, mit einem geeigneten Träger kombiniert sind.

## Claims

1. The use of a controlled-release combination of an agrochemically active compound and a carrier surrounding the active compound, to suppress antagonistic interactions in a mixture comprising the active compound surrounded by the carrier material, and at least one further agrochemically active compound wherein at least one of the agrochemically active compounds is a herbicide from the group consisting of (hetero)aryloxyaryloxyalkylcarboxylic acids, preferably fenoxaprop-p-ethyl, dichlofop, clodinafop-propargyl, fluazifop, cyclohexanedione oximes, preferably sethoxidim, clethodim or trialkoxidim, and at least one is a safener.

2. The use as claimed in claim 1, wherein the herbicide is completely or partially combined with the carrier.

3. The use as claimed in claim 1 or 2, wherein the safeners are selected from the group consisting of mefenpyr-diethyl and 5,5-biphenyl-2-isoxazoline-3-carboxylic acid.

4. The use as claimed in any of claims 1 to 3, wherein the carrier material is selected from the group consisting of materials of synthetic and natural origin and organic and inorganic nature, preferably polymers of natural and synthetic origin, wax, silicates, alumosilicates, alumina and minerals based on these materials.

5. The use as claimed in claim 4, wherein the active compound is surrounded by microcapsules as carrier, preferably by microcapsules constructed of polyureas, polyurethanes, polyamides, melamine resins, gelatin, wax and/or starch.

6. The use as claimed in claim 5, wherein the polyurethanes and the polyureas are prepared from isocyanate prepolymers, preferably from tolylene 2,4-diisocyanate, tolylene 2,6-diisocyanate, 4,4'-methylenebis(phenyl isocyanate) or hexamethylene diisocyanate.

7. The use as claimed in claim 5 or 6, wherein the microcapsules are prepared by interfacial polycondensation or coacervation.

8. A formulation, comprising a combination as claimed in any of claims 1 to 3 and at least one further component from the group consisting of agrochemically active compounds, surfactants, fertilizers and customary adjuvants, wherein the herbicide is a Fatty acid synthetase inhibitor, and wherein the herbicide or the safener is surrounded by a carrier material.

9. The formulation as claimed in claim 8, comprising a combination of a herbicide and a carrier material together with a safener.

10. A method for controlling harmful organisms, in particular harmful plants, which comprises applying a formulation as claimed in claim 8 or 9 in a manner known per se.

11. A process for preparing a formulation as claimed in claim 8 or 9, which comprises combining the active compound by customary processes known per se, preferably by dissolving, stirring or mixing, with a suitable support.

## Revendications

1. Utilisation d'une combinaison à libération prolongée d'une substance agrochimique active et d'un support enveloppant la substance active pour supprimer les interactions antagonistes dans un mélange composé de la substance active enveloppée par la matière support et d'au moins une autre substance agrochimique active, dans laquelle au moins une des substances agrochimiques actives est un herbicide du groupe formé par les acides (hétéro)-aryloxy-aryloxyalkylcarboxyliques, de préférence le fénoxaprop-p-éthyle, le dichlofop, le clodinafop-propargyl, le fluazifop, les cyclohexanedione-oximes, de préférence le séthoxydime, le cléthodime ou le trialkoxydime, et au moins une est un phytoprotecteur.

2. Utilisation selon la revendication 1, dans laquelle l'herbicide est combiné entièrement ou en partie avec le support.

3. Utilisation selon la revendication 1 ou 2, **caractérisée en ce que** les phytoprotecteurs sont choisis dans le groupe formé par les esters de méfenpyrdiéthyle et l'acide 5,5-biphényl-2-isoxazoline-3-carboxylique.

4. Utilisation selon l'une quelconque des revendications 1 à 3, **caractérisée en ce que** la matière support est choisie dans le groupe formé par des matières d'origine synthétique et naturelle et de nature organique et inorganique, de préférence des polymères d'origine naturelle et synthétique, des cires, des silicates, des aluminosilicates, des oxydes d'aluminium et des matières minérales a base de ces matières.

5. Utilisation selon la revendication 4, **caractérisée en ce que** la substance active est enveloppée par des microcapsules en tant que support, de préférence par des microcapsules constituées de polyurées, de polyuréthannes, de polyamides, de résines mélamine, de gélatines, de cires et/ou d'amidon.

6. Utilisation selon la revendication 5, **caractérisée en ce que** les polyuréthannes et les polyurées sont préparés à partir de prépolymères isocyanate, de préférence a partir de 2,4-diisocyanate de toluylène, de 2,6-diisocyanate de toluylène, de 4,4'-méthylènedi(phénylisocyanate) ou de diisocyanate d'hexamethylène.

7. Utilisation selon la revendication 5 ou 6, **caractérisée en ce que** les microcapsules sont fabriquées au moyen d'une polycondensation interfaciale ou d'une coacervation.

8. Formulation contenant une combinaison selon l'une quelconque des revendications 1 à 3 ainsi qu'au moins un autre composant du groupe formé par les substances agrochimiques actives, les tensio-actifs, les engrais ainsi que les adjuvants habituels, dans laquelle l'herbicide est un inhibiteur de la synthétase des acides gras, et dans laquelle l'herbicide ou le phytoprotecteur est enrobé d'une matière support.

9. Formulation selon la revendication 8, **caractérisée en ce qu'**une combinaison d'un herbicide et d'une matière support est présente conjointement avec un phytoprotecteur.

10. Procédé de lutte contre les organismes nuisibles, en particulier contre les végétaux nuisibles, **caractérisé en ce qu'**une formulation selon la revendication 8 ou 9 est utilisée d'une manière connue en soi.

11. Procédé de fabrication d'une formulation selon la revendication 8 ou 9, **caractérise en ce que** la substance active est combinée à un support approprié au moyen de procédés classiques, connus en soi, de préférence une dissolution, une agitation ou un mélange.
